Europäisches Patentamt

European Patent Office

Office européen des brevets

(11) Veröffentlichungsnummer: **0 289 849 B1**

## (12) EUROPÄISCHE PATENTSCHRIFT

(45) Veröffentlichungstag der Patentschrift: **12.08.92**

(21) Anmeldenummer: **88106189.9**

(22) Anmeldetag: **19.04.88**

Teilanmeldung 88117820.6 eingereicht am 19/04/88.

(51) Int. Cl.5: **A23G 1/18**, A23G 1/04, A23G 7/02

(54) **Verfahren und Vorrichtung zum kontinuierlichen Aufbereiten von zu verarbeitenden kakaobutterhaltigen oder ähnlichen fetthaltigen Massen.**

(30) Priorität: **02.05.87 DE 3714663**

(43) Veröffentlichungstag der Anmeldung:
**09.11.88 Patentblatt 88/45**

(45) Bekanntmachung des Hinweises auf die
Patenterteilung:
**12.08.92 Patentblatt 92/33**

(84) Benannte Vertragsstaaten:
**DE FR GB IT**

(56) Entgegenhaltungen:
EP-A- 0 129 884      DE-A- 2 536 063
FR-A- 953 603         FR-A- 1 155 456
FR-A- 2 063 186      US-A- 2 725 815
US-A- 4 267 703      US-A- 4 648 315

CONFECTIONERY PRODUCTION, Band 49, Nr. 6, Juni 1983, Seite 333, Baker Perkins Ltd, Surbiton, Surrey, GB; "ACS tempering unit. A head in technology"

CONFECTIONERY PRODUCTION, Band 54, Nr. 2, Februar 1988, Seite 147, Otto Hansel Machinery Ltd, Surbiron, Surrey, GB; "The tempering system of the future is here today!"

(73) Patentinhaber: **Sollich GmbH & Co. KG**
**Siemensstrasse 17 - 23**
**W-4902 Bad Salzuflen(DE)**

(72) Erfinder: **Sollich, Helmut**
**Karschau 54**
**W-2341 Rabenkirchen(DE)**

(74) Vertreter: **Patentanwälte Dipl.-Ing. Rudolf Bibrach Dipl.-Ing. Elmar Rehberg**
**Postfach 1453 Pütterweg 6**
**W-3400 Göttingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus einem Verfahren zum kontinuierlichen Aufbereiten von zu verarbeitenden kakaobutterhaltigen oder ähnlichen fetthaltigen Massen, insbesondere Schokolademasse, in einer Temperiermaschine mit mehreren Kühletagen mit Kühlflächen und nachgeschalteten Wärmeetagen mit Wärmeflächen, wobei die Masse über eine Pumpe nacheinander durch Massekammern der Kühletagen und der Wärmeetagen geführt und dabei in den Massekammern unter Anwendung angetriebener Rührwerkzeuge gerührt wird, während Kühlkammern an den Kühlflächen von einem Kühlmedium und Wärmekammern an den Wärmeflächen von einem Wärmemedium durchströmt werden. Die Erfindung zeigt gleichzeitig eine besonders geeignete Vorrichtung zur Durchführung dieses Verfahrens.

Ein Verfahren zum kontinuierlichen Aufbereiten und eine kontinuierlich arbeitende Temperiermaschine ist aus der DE-PS 25 36 063 bekannt. Dabei sind Kühletagen innerhalb eines zylinderförmigen Aufbaus mit senkrecht angeordneter Antriebswelle gebildet, wobei die Kühlkammern von einem Kühlmedium, insbesondere Wasser, durchströmt werden. In den Massekammern sind Rührwerkzeuge angeordnet, die in erster Linie auf die Aufgabe abgestellt sind, die an den Kühlflächen abgekühlte Masse abzuschaben. Die Vermischung dieser abgeschabten Masse mit der übrigen Masse in der Massekammer ist vergleichsweise wenig intensiv. Weiterhin arbeiten die schabenden Rührwerkzeuge, von denen je zwei in einer Massekammer angeordnet sind, in direktem Kontakt an den Kühlflächen, wobei örtlich variable Geschwindigkeiten auftreten. Auf kleinem Radius ist die Geschwindigkeit kleiner als außen im Bereich des Zylindermantels. Insbesondere im Innenbereich, also bei kleinen Geschwindigkeiten der schabenden Rührwerkzeuge, bilden sich Nester und Zonen, in denen die Masse erstarrt und somit an der Weiterverarbeitung nicht teilnimmt. Dies wird noch dadurch begünstigt, daß die jeweilige Durchlaßöffnung zwischen zwei benachbarten Kammern relativ weit außen, also auf großem Radius, angeordnet ist. Zwar sind die Durchlaßöffnungen etagenweise um etwa 180° versetzt zueinander angeordnet, jedoch bilden sich dadurch Zonen, in denen die Masse die einzelnen Massekammern und Etagen vergleichsweise schnell durcheilt, während andere Bereiche von der Masse wesentlich langsamer durchströmt werden. Die Kühlleistung ist insoweit unbefriedigend und verschlechtert sich in dem Maße, in welchem Nesterbildung und erstarrende Masse auf kleinem Radius auftritt. Damit ist die Masse am Austritt nicht optimal temperiert. Es besteht die Gefahr, daß die Masse eine vergleichsweise geringe Anzahl von stabilen Kristallen in Beta-Form aufweist. Die erstarrte Masse ist in solchem Fall insgesamt weich, weist keinen optimalen Glanz auf und kann zum Ausblühen neigen. Die Temperatur der Masse am Masseausgang liegt für helle Schokoladenmasse im Bereich von etwa 26°C - 28°C und für dunkle Schokoladenmasse etwa im Bereich von 29° - 30°C. Um den aufgezeigten Gefahren entgegenzuwirken, ist es bekannt, mehr kaltes Kühlwasser durch die Kühlkammern zu schicken. Trotzdem verbleibt die Durchströmung auf der Kühlmittelseite im laminaren Bereich. Die Regelung des Kühlmediums erfolgt durch ein Magnetventil mit vergleichsweise geringer Kühlmittelmenge und in der Weise, daß der Kühlmitteldurchlauf durch die kühlenden Kammern abwechselnd freigegeben und gänzlich abgesperrt wird. Bei diesem Verfahren zum kontinuierlichen Aufbereiten kann es vorkommen, daß die Masse am Masseausgang eine höhere Viskosität als angestrebt aufweist. Wird dann diese Schokolademasse beispielsweise zu Schokoladetafeln weiterverarbeitet, dann lassen sich die Tafeln schlechter aus der Form lösen, weil die Schrumpfung der Masse unzureichend ist. Die Masse selbst ist nicht optimal haltbar und lagerbeständig. Auch das Aussehen läßt zu wünschen übrig, indem die Schokoladetafel leicht grau und glanzlos erscheint. Die durch die schabenden Rührwerkzeuge verursachten und durch die schlechte Mischwirkung nicht ausgeglichenen örtlichen Temperaturunterschiede der Masse können sich bereichsweise nachteilig auswirken, indem örtlich Temperaturerhöhungen auftreten können, die sich nachteilig auf die Vorkristallisierung auswirken. Auch auf der Masseseite wird die Temperiermaschine laminar durchströmt, so daß der Wärmeübergang und der Wärmeausgleich innerhalb der Masse vergleichsweise schlecht ist.

US-A-4 648 315 beschreibt eine Vorrichtung zum Temperieren von Schokoladenmassen, bestehend aus übereinander angeordneten Kühl- und Massekammern, wobei jede Massekammer mit zwei gegenläufigen schabenden Rührwerkzeugen ausgestattet ist, wobei die in den Massekammerns sich unten befindenden Rührwerkzeuge die Schokoladenmasse nach außen und die in den Massekammern oben angebrachten Rührelemente die Schokoladenmasse wieder nach innen befördern. Der Übergang von einer Massekammer zur nächsten erfolgt bei kleinem Radius.

Die DE-PS 16 07 802 zeigt ein Verfahren zum diskontinuierlichen Aufbereiten solcher Massen, bei dem also chargenweise in einem Kessel in vergleichsweise langer Zeit gemischt, gerührt und aufbereitet wird. Die Wärmetauschfläche ist im Verhältnis zum Volumen nur sehr klein und es wird mit vergleichsweise kleinen Temperaturunterschieden zwischen Masse und Kühlmedium gearbeitet, so daß sich entsprechend lange Aufbereitungszeiten ergeben. Die auf diese Weise aufbereitete Masse weist eine gute Stabilität auf, jedoch ist in nachteiliger Weise die Bildung von Makrokristallen begünstigt, so daß die Masse eine geringe Schrumpfung aufweist, so daß das Ausschlagen aus der Form erschwert ist. Eine eine große Anzahl von Makrokristallen aufweisende Masse besitzt darüberhinaus auch wenig Glanz.

Andererseits ist es bekannt, daß ein guter Glanz und ein hervorragendes Aussehen bei derart aufbereiteten Massen dann vorliegen, wenn die Masse bei ihrer Vorkristallisierung einen hohen Anteil an stabilen Kristallen in $\beta$-Form aufweisen. Solche Kristalle fallen in einem Temperaturbereich zwischen etwa 29 und 34°C an, während in einem Temperaturbereich etwa zwischen 24 und 29°C vorwiegend instabile Modifikationen ($\beta'$-Form) auftreten.

Der Erfindung liegt die Aufgabe zugrunde, ein kontinuierliches Verfahren und eine zugehörige Vorrichtung der eingangs beschriebenen Art derart weiterzubilden, daß bei hoher Masseausgangstemperatur eine ausreichend große Anzahl von Kristallen in stabiler Beta-Form in der Masse anfallen und trotzdem Mikrokristalle erzeugt und Makrokristalle vermieden werden. Die erzeugten Kristalle sollen nicht zu groß sein, um eine günstige Fließfähigkeit der aufbereiteten Masse für die Weiterverarbeitung einzuhalten bzw. zu bekommen.

Erfindungsgemäß wird dies bei dem Verfahren der eingangs beschriebenen Art dadurch erreicht, daß die Menge des durch die Kühlkammern strömenden Kühlmediums so gesteigert wird, daß sich ein turbulenter Strömungszustand ergibt, daß die Masse in den Massekammern beim Rühren intensiv durchmischt wird, daß sich hier Verwirbelung einstellt, und daß bei berührungsloser Abnahme der Masse von den Kühl- bzw. Wärmeflächen durch die Rührwerkzeuge mit einem Schergefälle im Spalt zwischen den Kühl- bzw. Wärmeflächen einerseits und den Rührwerkzeugen andererseits zwischen 500 und 4000 sec$^{-1}$ gearbeitet wird. Mit der vorliegenden Erfindung wird die laminare Durchströmung der Kühlkammern verlassen und der Durchsatz sowohl auf der Seite der Kühlkammern wie auch auf der Seite der Massekammern vergleichsweise erhöht. Diese Erhöhung auf der Masseseite erfolgt derart, daß eine Verwirbelung der Masseteile untereinander stattfindet, also die Masse immer wieder erneut und an anderen Stellen zerteilt und wieder zugefügt und wieder zerteilt usw. wird. Dies kann schließlich soweit gesteigert werden, daß zumindest bereichsweise bzw. örtlich an verschiedenen Stellen in der Masse selbst auch Turbulenz erzeugt wird. Wichtig ist auch die Einhaltung eines ausreichend hohen Schergefälles. Das Schergefälle ist definiert als Quotient zwischen dem Geschwindigkeitsunterschied der an den Spalt angrenzenden Wände gegenüber der Spaltweite. Die an den Spalt angrenzenden Wände werden einerseits von den Kühl- bzw. Wärmeflächen und andererseits von den Rührwerkzeugen gebildet. Das Schergefälle ändert sich auch mit dem Radius, weil sich die Geschwindigkeit örtlich in Abhängigkeit vom Radius ändert. Damit werden gleichzeitig unterschiedlich große Schergefälle an den örtlichen Punkten entsprechend dem wachsenden Radius angewendet. Diese verschiedenen Schergefälle liegen jedoch in einem vergleichsweise großen Bereich und sind absolut gesehen selbst groß. Überraschenderweise ist es mit dem erfindungsgemäßen Verfahren möglich, eine vergleichsweise große Anzahl von Kristallen in stabiler $\beta$-Form zu erzeugen (4 - 5%), so daß nach der Kühlphase ein Anwärmen in der Wärmephase über die Schmelzbereich der unstabilen Kristalle möglich ist und trotzdem die stabilen Kristalle in $\beta$-Form erhalten bleiben. Somit ergibt sich die Möglichkeit, nicht nur die Masseausgangstemperatur zu steigern, sondern auch die Temperatur des Kühlmediums. Das Kühlmedium weist auf jeden Fall eine höhere Temperatur als 16°C auf und wird bei großer umgewälzter Menge nur in einem vergleichsweise kleinen Temperaturbereich von 2 - 3°C temperaturmäßig geregelt. Durch die Turbulenz auf der Kühlwasserseite ist der Wärmeübergang erheblich verbessert. Ähnliches gilt für die Masseseite, so daß es möglich wird, die Temperaturen genauer und gleichmäßiger einzuhalten, so daß Masseausgangstemperaturen am Ende der Wärmestufe zwischen 29 und 34°C durchaus realistisch sind. Hierdurch wiederum ergeben sich gute Fließeigenschaften und konstante Viskosität der Massen, wodurch wiederum die Weiterverarbeitungseigenschaften begünstigt werden. So ist z. B. die in einer Überziehanlage abzugebende Schokolademenge genauer einhaltbar und durch die hohe Temperatur überdies noch gering, also ohne, daß ein Eindicken der Masse auftritt. Durch die vergleichsweise hohe Temperatur auf der Masseseite tritt nur ein ganz geringer Anteil instabiler $\beta$-Kristalle auf. Die Lagerbeständigkeit und die Haltbarkeit des mit der Masse hergestellten Produkts werden besser. Auch die Schrumpfung ist vergleichsweise hoch, so daß sich eine gute Entformbarkeit auf bei schwieriger Formgebung einstellt. Durch den turbulenten Strömungszustand auf der Kühlwasserseite und die hohe Verwirbelung auf der Masseseite treten geringere Temperaturschwankungen auf und die Masseaustrittstemperatur wird vergleichmäßigt, so daß auch eine konstante Viskosität erreicht wird. Das Produkt erreicht ein hervorragendes Aussehen mit hohem Glanz und knackigem Bruch. Durch die Verwirbelung auf das Masseseite werden die stabilen $\beta$-Kristalle homogen in der Masse verteilt, so daß sich an dem erstarrten Produkt ein gleichmäßiges Bruchbild über den Querschnitt ergibt. Durch den verbesserten Wärmeaustausch auf der Kühlwasserseite ist es auch möglich, mit etwas höheren Masseeingangstemperaturen zu arbeiten, also mit einem Zustand der Masse, bei welchem der Vorteil besteht, daß alle Kristalle ausgeschmolzen sind. Diese höhere Masseeingangstemperatur erfordert und erlaubt in vorteilhafter Weise den Kontakt dieser vergleichsweise heißen Masse mit vergleichsweise kühlen oder kälteren Kühlflächen in einem Temperaturbereich von 16 bis 22°C, so daß gleichsam eine Initialzündung zum Bilden und Abscheiden der stabilen $\beta$-Kristalle durchgeführt wird. Diese stabile Kristallform bildet sich an vergleichsweise kühleren Flächen besser als an wärmeren Flächen. Durch die Anwendung des Schergefälles einerseits und die intensive Verwirbelung auf der Masseseite andererseits werden diese Kristalle in stabiler $\beta$-Form homogen in der Masse verteilt, so daß sie über den gesamten Querschnitt der Masse verteilt wiederum die Bildung bzw. Entstehung weiterer $\beta$-Kristalle nach sich ziehen können. Wahrscheinlich ist es hierauf zurückzuführen, daß die Ausbeute an stabilen $\beta$-Kristallen mit einem bisher nicht erreichbaren Anteil von 4 bis 5% möglich geworden ist. Bei dickflüssigen Massen, also solchen mit hoher Viskosität, können niedrigere Schergefälle, also im Bereich von 500 bis 1000 sec$^{-1}$ angestrebt werden. Dünnflüssigere Massen lassen sich besser mit höheren Schergefällen in der Größenordnung von 2000 bis 4000 sec$^{-1}$ behandeln. Auf keinen Fall darf jedoch die durch das Schergefälle entstehende Reibungswärme zu einer Schädigung der Kristalle und damit zu einem Schmelzen bereits gebildeter Kristalle oder zu der Verhinderung ihrer Bildung führen. Allzu große Schergefälle können sich somit als schädlich erweisen.

Das Kühlmedium wird kontinuierlich durch die Kühlkammern umgewälzt; dabei wird die Temperatur des Kühlmediums gesteuert bzw. geregelt. Hierdurch ist die Auf-Zu-Regelung verlassen und die Kühlflächen werden dauernd ausgelastet. Es tritt keine örtliche Schädigung der Masse ein, weil größere Temperaturschwankungen vermieden werden. Über die Temperaturregelung im kontinuierlichen Kreislauf des Kühlmediums ist eine Anpassungsmöglichkeit an die Durchsatzmenge der Masse gegeben. Das Kühlmedium wird auf jeden Fall mit einer Temperatur von mehr als 16°C - vorzugsweise in einem Bereich zwischen 16 und 22°C -umgewälzt, wobei sich die relativ großen Wassermengen ohne Weiteres beherrschen lassen, da sie im wesentlichen nur im Kreis geführt werden.

Das Wärmemedium wird ebenfalls kontinuierlich durch die Wärmekammern umgewälzt, wobei Menge und Temperatur des Wärmemediums konstant gehalten werden. Diese Arbeitsweise wird dadurch möglich, daß die Masse in der ersten Stufe, also in der Kühlphase, auf eine je nach Anwendungsfall durchaus unterschiedliche, jedoch dann aber immer konstante Temperatur abgekühlt wird, so daß sich über die Steuerung des Wärmemediums in der zweiten Stufe, also der Wärmephase, die entsprechende Masseausgangstemperatur einstellt. Diese Masseausgangstemperatur kann erstaunlicherweise höher liegen als bisher üblich, und zwar in der Größenordnung von etwa 2°C. Dabei tritt erstaunlicherweise weder eine Schädigung der Masse noch eine Verminderung des Anteils der stabilen Kristalle in $\beta$-Form auf.

Die Masse kann in einer ersten Stufe auf 28 bis 29°C abgekühlt und dabei eine möglichst große Anzahl von stabilen $\beta$-Kristallen erzeugt werden, worauf die Masse dann in einer zweiten Stufe auf eine Masseausgangstemperatur von ca. 31,5 bis 32,5°C bei einer konstanten Temperatur des Wärmemediums in der Größenordnung von 31,5 bis 33°C erwärmt wird. Die Verweilzeiten in den beiden Stufen können etwa gleich lang gewählt werden, so daß vorteilhaft in der zweiten Stufe, der Wärmephase, eine prozentual gegenüber der Kühlphase erhöhte Verweildauer möglich wird.

Die Vorrichtung zur Durchführung des Verfahrens arbeitet mit einer Temperiersäule, die mehrere, einen Zylinder bildende, übereinander angeordnete und an einem Kreislauf für Kühlmedium angeschlossene Kühlkammern und an einen Wärmekreislauf für Wärmemedium angeschlossene Wärmekammern und zwischen den Kühlflächen und den Wärmeflächen gebildete Massekammern aufweist, wobei in den Massekammern Rührwerkzeuge auf einer gemeinsamen, senkrecht angeordneten Antriebswelle umlaufen und die einzelnen Massekammern über Durchlaßöffnungen miteinander verbunden sind. Dabei ist eine Pumpe zum Fördern der Masse durch die Massekammern, eine weitere Pumpe für den Antrieb des Kühlmediums durch die Kühlkammern und eine Pumpe für den Antrieb des Wärmemediums durch die Wärmekammern vorgesehen. Erfindungsgemäß sind die Durchlaßöffnungen von je zwei benachbarten Massekammern abwechselnd auf kleinem und auf großen Radius vorgesehen; die Rührwerkzeuge sind als berührungslose Abstreif- und Mischorgane ausgebildet, die Pumpe für das Kühlmedium ist zwecks Erzeugung von Turbulenz für eine hohe Durchsatzleistung ausgelegt und der Kreislauf des Kühlmediums ist mit einer Temperaturregeleinrichtung versehen. Durch die geschickte Anordnung der Durchlaßöffnungen im Wechsel innen und außen wird die Masse gezwungen, gleichmäßig die Massekammern nacheinander zu durchströmen. Die Bildung von Nestern und erstarrten Zonen wird mit Sicherheit vermieden und die Verweildauer für die einzelnen Massepartikel liegt in einem konstanten Bereich. Die Rührwerkzeuge sind nicht mehr lediglich als berührungslose Abstreiforgane ausgebildet, sondern besitzen eine beachtliche Mischwirkung, so daß auch auf der Masseseite die Turbulenz der Strömung erreicht wird. Unter Ausnutzung dieses turbulenten Strömungszustandes können vorteilhaft die Kühlflächen vergleichsweise klein gestaltet werden. Andererseits muß die Pumpe für das Kühlmedium auf eine hohe Durchsatzleistung ausgelegt sein. Dieser Mehraufwand ist jedoch einfach beherrschbar. Der kontinuierliche Kreislauf des Kühlmediums, also ohne Unterbrechung, kann auch vergleichsweise in seiner Temperatur geregelt werden, wobei sich Temperaturänderungen, die ohnehin nur in kleinen Bereichen durchgeführt werden, sehr schnell einstellen, weil die Menge des Kühlmediums wesentlich größer ist als bisher.

Als Rührwerkzeuge können radial von der Antriebswelle abstehende Rührarme vorgesehen sein, die mit einer Vielzahl von Mischschaufeln besetzt sind. Die wesentliche Aufgabe dieser Rührwerkzeuge ist in der Durchmischung und der Verwirbelung der Masse zu sehen, die bis zur Herbeiführung eines turbulenten Strömungszustands gehen kann, während das Abnehmen der Masse von den Kühlflächen als sekundär zu beurteilen ist bzw. durch die Anwendung eines Schergefälles ohnehin in ausreichendem Maße sichergestellt wird.

In jeder im wesentlichen durch zwei Kühlflächen begrenzten Massekammer kann nur ein Rührwerkzeug mit etwa mittig angeordneten Rührarmen vorgesehen sein, wobei die Rührarme beidseitig mit den Mischschaufeln besetzt sind und die Mischschaufeln auf der einen Seite mit entgegengesetzter Förderwirkung zu der anderen Seite angeordnet sind. Auf diese Art und Weise ergibt sich die angestrebte intensive Verwirbelung. Die Masse wird in Ringbereichen unterschiedlicher Durchmesser in sich kreisförmig bewegt, wobei in dieser Bewegung die gesamte Höhe der Massekammer erfaßt wird. Diese Bewegung findet in Ringzonen statt, die sich nur durch ihre Radien unterscheiden. Da außerdem die Masse zwangsweise von innen nach außen bzw. in der nächsten Massekammer von außen nach innen geführt wird, ist dieser beschriebenen korkenzieherartigen Bewegung in den einzelnen Ringbereichen die Durchströmungsrichtung überlagert, so daß auf diese Art und Weise eine kombinierte Bewegung der Masse durch die Massekammern stattfindet.

Die Mischschaufeln können plattenförmig ausgebildet und schrägstehend auf den Rührarmen angeordnet sein. Damit bewirken die Mischschaufeln eine Verschiebung der Masse in radialer Richtung, und zwar gegensätzlich auf der einen und auf der anderen Seite, so daß die beschriebene ringwulstartige Bewegung stattfindet.

Die auf unterschiedlichen Radien angeordneten Mischschaufeln können in unterschiedlicher Schräglage angeordnet sein, um der unterschiedlichen örtlichen Antriebsgeschwindigkeit - je nach Radius -entgegenzuwirken bzw. einen Ausgleich herbeizuführen. Die Mischschaufeln sind also auf kleinem Radius vergleichsweise schräger anzuordnen als auf großem Radius, wo die örtliche Geschwindigkeit ohnehin höher ist.

Die Rührarme können durchbrochen ausgebildet sein, um den Übertritt der Masse aus der unteren Hälfte einer Massekammer in die obere Hälfte und umgekehrt zu begünstigen.

Die Rührarme können auf die Antriebswelle umgebenden Lagerringen angeordnet sein, wobei die Lagerringe einseitig zur Bildung der inneren Durchlaßöffnungen durchbrochen sind. Damit wird eine sehr einfache Möglichkeit aufgezeigt, wie die Durchlaßöffnungen auf kleinem Radius realisiert werden können. Es ergibt sich der Vorteil, daß die Rührorgane bei identischer Ausbildung von Kammer zu Kammer lediglich um 180° gewendet zum Einsatz gelangen. Die äußeren Durchlaßöffnungen können in der Art und Weise realisiert werden, wie dies auch bisher bekannt war.

Es ist auch möglich, mehrere Kühletagen und/oder Wärmeetagen patketweise zusammenzufassen und jedem so gebildeten Paket von Kühletagen einen eigenen Kühlmittelkreislauf oder -teilkreislauf und/oder jedem Paket aus Wärmeetagen einen eigenen Wärmemittelkreislauf oder -teilkreislauf zuzuordnen. Damit kann in geschickter Weise auf den zeitlichen Temperaturverlauf in der Schokolademasse Einfluß genommen werden. Die Pakete können unterschiedliche Anzahlen von Kühletagen aufweisen. Jedes Paket kann mit einer eigenen Temperaturregelung versehen sein.

Die Erfindung wird anhand eines bevorzugten Ausführungsbeispiels weiter verdeutlicht und beschrieben. Es zeigen:

Figur 1   eine schematisierte Darstellung wesentlicher Teile der Vorrichtung in einer ersten Ausführungsform,

Figur 2   einen Vertikalschnitt durch die Massekammer mit Rührwerkzeug,

Figur 3   eine Draufsicht auf ein Rührwerkzeug,

Figur 4   eine schematische Darstellung wesentlicher Teile der Vorrichtung in einer zweiten Ausführungsform und

Figur 5   ein Diagramm der Temperaturen über der Zeit und durch die Vorrichtung gemäß Figur 4.

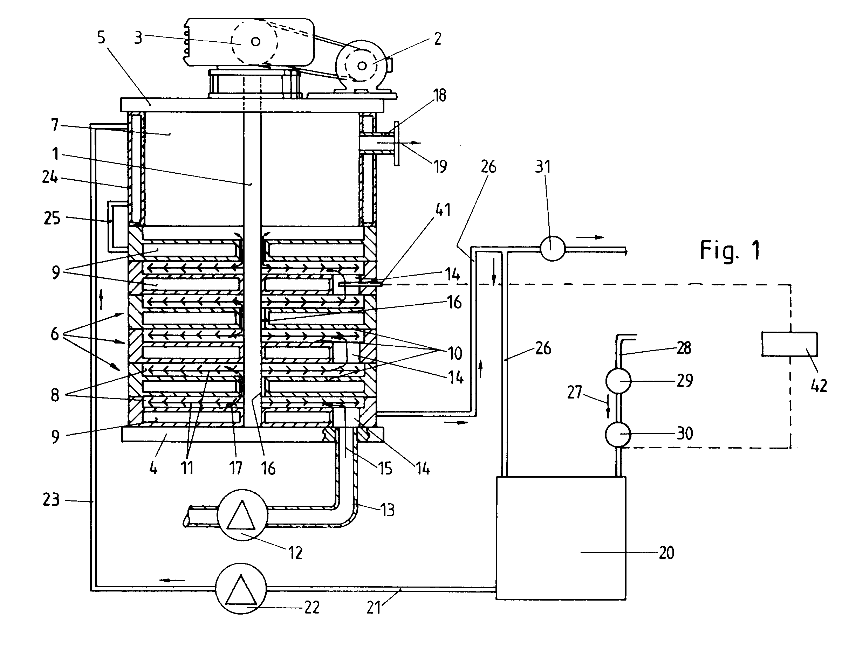

Die in Figur 1 dargestellte Vorrichtung weist im wesentlichen zylindrische Gestalt auf und ist mittig von einer Antriebswelle 1 durchsetzt, die von einem Motor 2 über ein Getriebe 3 her angetrieben wird. Zwischen einer Bodenplatte 4 und einer Deckplatte 5 sind eine Mehrzahl von Kühletagen 6 und eine Vorratskammer 7 gebildet. Jede Kühletage 6 weist eine Massekammer 8 und eine Kühlkammer 9 auf. Die Massekammern 8 sind so angeordnet, daß diese beidseitig an Kühlkammern 9 angrenzen, so daß hier Kühlflächen 10 gebildet sind. In den Massekammern 8 sind Rührwerkzeuge 11 angeordnet, die mit der Antriebswelle 1 drehfest verbunden sind, so daß die Rührwerkzeuge in den Massekammern 8 kontinuierlich angetrieben werden. Die aufzubereitende Masse wird mittels einer Pumpe 12 über eine Leitung 13 in die unterste Massekammer 8 der Kühletagen 6 eingebracht, wobei die Masse über eine Durchlaßöffnung 14 in die unterste Massekammer 8 übertritt. Die Durchlaßöffnung 14 ist außen auf relativ großem Radius der untersten Kühletage 6 angeordnet. Die Masse wird somit außen zugeführt und bewegt sich gemäß Pfeil 15 in der Massekammer 8 bei intensiver Durchmischung und Kühlung letztlich radial nach innen, weil die folgende Durchlaßöffnung 16 zwischen der untersten und der zweituntersten Massekammer 8 auf kleinem Radius, also benachbart zu der Antriebswelle 1 angeordnet ist. Die Masse tritt hier gemäß Pfeil 17 über. In der zweituntersten Massekammer 8 bewegt sich die Masse ebenfalls unter intensiver Durchmischung durch die Rührwerkzeuge und entsprechender Kühlung an den Kühlflächen 10 von innen nach außen in wulstartigen, spiralisch verlaufenden Bahnen, bis wieder eine Durchlaßöffnung 14 auf großem Radius im Bereich der drittuntersten Kühletage 6 erreicht wird. Die Durchlaßöffnungen 16 und 14 wechseln also etagenweise ab, so daß für die Masse eindeutige Strömungsverhältnisse geschaffen werden, wobei es keine toten Zonen gibt, sondern die Masse zwangsweise abwechselnd in den Massekammern 8 von innen nach außen bzw. von außen nach innen geführt wird. Die Rührwerkzeuge 11 sind so ausgebildet und werden derart angetrieben, daß die Durchströmung der Massekammern 8 unter intensiver Durchmischung und Verwirbelung, insbesondere aber zumindest in einigen Bereichen örtlich turbulent erfolgt. Hierdurch wird der Wärmeübergang von den Kühlflächen 10 auf die Masse erheblich verbessert. Die Masse wird durch die Rührwerkzeuge 11 gleichmäßig durchmischt, ohne daß eine Schlierenbildung auftritt. Auf der obersten Kühletage 6 tritt die Masse fertig aufbereitet und entsprechend temperiert entweder - wie dargestellt - in die Vorratskammer 7 über und gelangt über einen Masseauslaß 18 gemäß Pfeil 19 aus und gelangt so zu einer Verarbeitungsstation, beispielsweise einer Überziehanlage. Die Vorratskammer 7 ist kein notwendiger Bestandteil der Vorrichtung und kann somit auch völlig in Fortfall kommen. In diesem Fall ist dann der Masseanschluß 18 direkt an die oberste Kühletage 6 angeschlossen.

Der zugehörige Kühlmittelkreislauf, der in der Regel mit Wasser betrieben wird, weist einen Mischbehälter 20 auf, von dem eine Leitung 21 zu einer Pumpe 22 führt. Über eine Leitung 23 kann zunächst eine doppelwandige Gehäusewandung 24, die die Vorratskammer 7 umschließt, angeströmt werden. Über eine Leitung 25 wird die Kühlkammer 9 der obersten Kühletage 6 angeströmt. Die Kühlkammern 9 sind etagenweise von oben nach unten miteinander verbunden und schließlich gelangt das Kühlmedium über eine Leitung 26 zurück in den Mischbehälter 20. Wenn keine Vorratskammer 7 vorgesehen ist, ist die Leitung 23 direkt mit der Kühlkammer 9 der obersten Kühletage 6 verbunden. In der Regel wird das Kühlwasser im Gegenstrom zu der Schokolademasse geführt.

Während in Figur 1 nur ein Paket von Kühletagen 6 dargestellt ist, kann die Vorrichtung auch so gestaltet werden, daß mehrere Pakete von Kühletagen 6 vorgesehen sind. Jedes Paket verfügt dann über seinen eigenen Kühlmittelkreislauf oder -teilkreislauf. Die einzelnen Kühlmittelkreisläufe oder -teilkreisläufe können vorteilhaft auch mit unterschiedlichen Temperaturen gefahren werden. Die einzelnen Pakete von Kühletagen 6 müssen nicht räumlich besonders getrennt voneinander angeordnet werden, sondern können unmittelbar aneinander anschließen. Auch die Anzahl von Kühletagen 6 kann in jedem Paket unterschiedlich gewählt werden, um z. B. die Vorkristallisierung gezielt zu beeinflussen.

Das Kühlwasser wird in all diesen Fällen über die Pumpe 22 oder mit Hilfe anderer Pumpen unter turbulenter Durchströmung der Kühlkammern 9 in großer Menge und mit großer Geschwindigkeit umoewälzt. Die Temperatur des Kühlwassers liegt in der Größenordnung von 16 bis 22 °C. Infolge der großen umgewälzten Menge Wassers wird die Temperatur nur in sehr engen Grenzen geregelt. Eine Absenkung der Temperatur des Kühlwassers erfolgt durch Frischwasser gemäß Pfeil 27 durch eine Leitung 28, in welcher ein von Hand einstellbares Regelventil 29 und ein Magnetventil 30 angeordnet sind. Es versteht sich, daß das Magnetventil 30 von einer entsprechenden Temperaturregelung angesteuert wird, die Temperaturfühler aufweist, welche an den verschiedenen Stellen an die Massekammern einragend angeordnet sind. Zur Verdeutlichung ist ein solcher Temperaturfühler 41 dargestellt. Der Kühlmittelkreislauf wird kontinuierlich betrieben, es gibt also keine Zustände, bei welchen die Pumpe 22 nicht arbeitet. Wenn Frischwasser zur Senkung der Temperatur im Kühlkreislauf zugegeben wird, wird überschüssiges Wasser über ein Ventil 31 abgeführt. Auf die gleiche Weise wird auch überschüssige Wärme aus der Masse herausgenommen. Im allgemeinen wird die Masse über eine Pumpe 12 mit höherer Temperatur angeliefert, als es der Verarbeitungstemperatur am Masseauslaß 18 entspricht. Die Durchströmung auf der Kühlwasserseite wird immer unter Turbulenz, also entsprechend hoher Reynolds-Zahl, durchgeführt. Die gewünschte Masseaustrittstemperatur am Ende einer Kühletage 6 wird an einem Temperaturregler 42 eingestellt und regelt dann die Menge der über das Magnetventil 30 frisch zugeführten Kühlwassermenge.

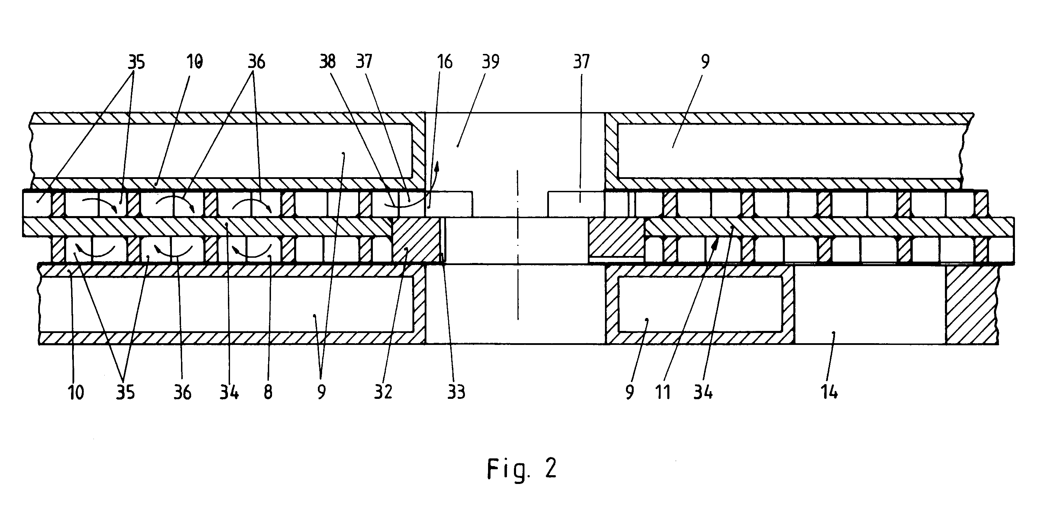

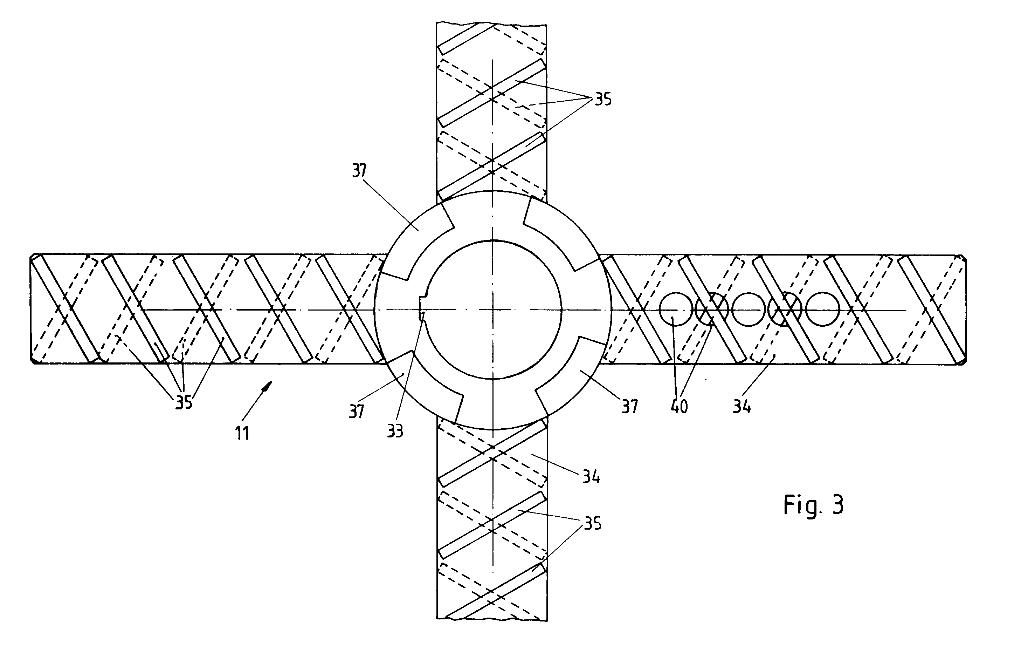

Figur 2 zeigt einen Schnitt durch eine einzelne Massekammer 8 benachbart zu zwei Kühlkammern 9. Die Antriebswelle 1 ist aus Übersichtlichkeitsgründen weggelassen. Man erkennt, daß in der einzelnen Massekammer 8 nur ein Rührwerkzeug 11 angeordnet ist, welches einen Lagerring 32 aufweist, der eine Nut 33 für den Eingriff einer Feder der Antriebswelle 1 aufweist. Radial nach außen erstrecken sich Rührarme 34, die beispielsweise im Abstand von 90° angeordnet sind, wie dies Figur 3 erkennen läßt. Die Rührarme 34 sind auf ihrer Ober- und Unterseite mit Mischschaufeln 35 besetzt, die schrägstehend angeordnet sind, wie dies insbesondere aus Figur 3 ersichtlich ist. Der Schrägstand auf der Ober- und der Unterseite ist entgegengesetzt gerichtet, so daß die Masse intensiv durchmischt wird. Es bilden sich im Sinne des Radiusses von innen nach außen fortschreitend ringwulstartige Zonen, die durch Pfeile 36 verdeutlicht sind. Es versteht sich, daß durch den Zwangsdurchlauf der Masse vermittels der Pumpe 12 sich diese Zonen radial von außen nach innen bzw. von innen nach außen spiralisch erstrecken. Auf diese Art und Weise herrscht in der Massekammer eine stark verwirbelte, insbesondere turbulente Durchströmung vor und es werden alle Bereiche einer Massekammer 8 gleichmäßig durchströmt. Es ist weiterhin anhand von Figur 2 erkennbar, daß die Mischschaufeln 35 berührungslos arbeiten, also die Kühlflächen 10 nicht berühren. Die Massebewegung reicht aus, um die Kühlflächen 10 immer wieder zu säubern bzw. Masse von den Kühlflächen 10 abzunehmen und in die spiralige wulstartige Durchmischung einzubeziehen. Bei der in Figur 2 dargestellten Massekammer 8 strömt die Masse radial von außen nach innen, d. h. sie tritt durch die Durchlaßöffnung 14 ein und über die Durchlaßöffnung 16 in die nächste Massekammer, die sich oberhalb anschließt, über. Zu diesem Zweck weist der Lagering 32 rippenartige Erhebungen 37 auf, die über den Umfang gesehen durchbrochen bzw. abgesetzt sind, so daß sich die Masse gemäß Pfeil 38 nach innen bewegen kann. Die nachfolgende Kühletage 6 weist hier einen Ringraum 39 auf, der zwischen ihrer Wandung und der Antriebswelle 1 gebildet ist und die Durchlaßöffnung 16 ergänzt. Die Rührwerkzeuge 11 in den einzelnen Massekammern 8 sind identisch ausgebildet, wobei lediglich zur Bildung der Durchlaßöffnungen 16 die Einbaurichtung zu beachten ist.

Figur 3 zeigt eine Draufsicht auf ein solches Rührwerkzeug 11. Es können auch mehr als vier Rührarme 34 vorgesehen sein. Die Rührarme selbst können auch Durchbrechungen 40 aufweisen, wie dies im Bereich eines Rührarmes 34 angedeutet ist. Diese Durchbrechungen dienen dazu, auch im Bereich der Rührarme 34 den Massedurchtritt von oben nach unten und unten nach oben gemäß Pfeilen 36 (Figur 2) zu gestatten. In Figur 3 ist die Schräglage der Mischschaufeln 35 über den Radius identisch ausgebildet. Da notwendigerweise die Rührarme 34 auf größerem Radius eine entsprechend größere Umlaufgeschwindigkeit aufweisen, kann die Anordnung der Mischschaufeln 35 auch so durchgeführt sein, daß die Schräglage nach außen hin zu kontinuierlich abnimmt, ob hier eine vergleichmäßigende Wirkung zu erzielen. Die Mischschaufeln 35 sind als gerade, abstehende, plattenförmige Körper angeordnet. Auch eine schaufelartige Ausführungsform ist möglich.

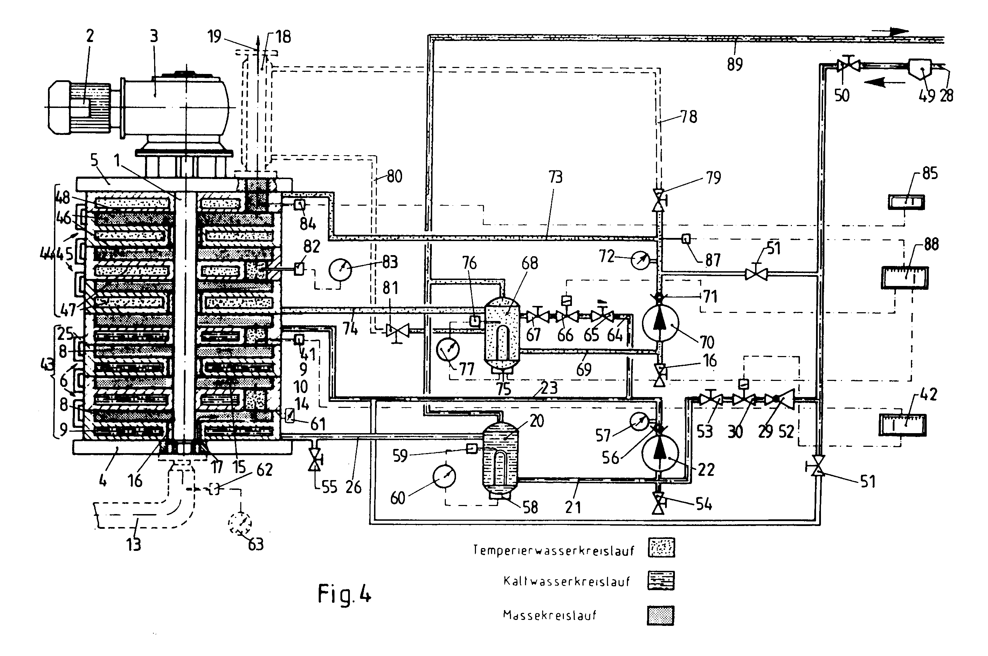

Die in Figur 4 dargestellte Vorrichtung ist an sich prinzipiell ähnlich aufgebaut wie die Vorrichtung gemäß Figur 1. Im unteren Bereich ist die Antriebswelle 1 auch hier von den Kühletagen 6 umgeben, die insgesamt eine Kühlstufe 43 bilden, während im oberen Bereich eine Wärmestufe 44 vorgesehen ist. Eine Vorratskammer 7 wie bei der Ausführungsform nach Figur 1 kann zusätzlich vorgesehen sein, ist aber in den meisten Fällen nicht erforderlich. Die Wärmestufe 44 weist Wärmeetagen 45 auf, die sich prinzipiell von den Kühletagen 6 nicht in ihrem Aufbau, sondern nur in ihrer Betriebsweise dadurch unterscheiden, daß im Bereich der Kühlstufe 43 die Masse abgekühlt wird, während sie im Bereich der Wärmestufe 44 wieder gezielt erwärmt wird. In jeder Wärmeetage 45 ist eine Massekammer 46 gebildet, wobei auch hier die Durchlaßöffnungen 14 und 16 innen bzw. außen angeordnet sind. Der konstruktive Aufbau der Wärmeetagen 45 unterscheidet sich von den Kühletagen 6 nicht. So weisen auch die Wärmeetagen 45 Wärmekammern 47 und Wärmflächen 48 auf, an denen die Masse erwärmt wird. Die Rührwerkzeuge 11 sind der Übersichtlichkeit halber nicht dargestellt. Die Rührwerkzeuge werden in den Massekammern 46 kontinuierlich angetrieben. Die aufzubereitende Masse wird mittels einer nicht dargestellten Pumpe über die Leitung 13 und die hier innen liegende Durchlaßöffnung 16 der untersten Massekammer 8 zugeführt, wo sie durch die Rührwerkzeuge verwirbelt wird und auf einen größeren Durchmesser gelangt, so daß sie durch die außenliegende Durchlaßöffnung 14 in die nächste Kammer eintreten kann. Auf diese Art und Weise durchwandert die Masse, gefördert von der nicht dargestellten Pumpe, sämtliche Massekammern 8 der Kühlstufe 43 und gelangt im Anschluß daran in die unterste Massekammer 46 der Wärmstufe 44. Die Masse wird dann wieder erwärmt.

Die verschiedenen Kreisläufe sind wie folgt ausgebildet und angeordnet: über eine Leitung 28, in der ein Schmutzfilter 49 und ein Handabsperrventil 50 vorgesehen sind, gelangt Frischwasser zu einem Füllventil 51, so daß damit der Kühlkreislauf der Kühlstufe 43 befüllt werden kann. Dieser Kühlkreislauf weist den Mischbehälter 20 auf, von dem eine Leitung 21 zu der Pumpe 22 führt, von der die Leitung 23 zu der obersten Etage 6 der Kühlstufe 43 führt, und zwar in die dort vorgesehene Kühlkammer 9. Über eine Leitung 26 gelangt das Kühlwasser aus der untersten Kühlkammer 9 zurück zum Mischbehälter 20. In einer von der Leitung 28 zu der Leitung 21 führenden Leitung 52 ist ein Regelventil 29, welches als Druckminderventil ausgebildet sein kann, ein Magnetventil 30 sowie ein Handabsperrventil 53 angeordnet, so daß über diese Leitung 52 Kühlwasser aus dem Vorlauf dem Kreislauf bei Bedarf hinzugefügt werden kann, um die Temperatur des umlaufenden Wassers in der Kühlstufe 43 zu erniedrigen. Es sind Wasserablaßventile 54 und 55 dieses ersten Kreislaufs vorgesehen. Hinter der Pumpe 22 kann ein Rückschlagventil 56 und ein Manometer 57 vorgesehen sein. Der Mischbehälter 20 ist mit einer Heizeinrichtung 58 versehen, die von einem Temperaturfühler 59 über ein Kontaktthermometer 60 betrieben werden kann und insbesondere für die Nachtheizung bestimmt ist, also zu Zeiten, in denen die Schokolademasse in der Vorrichtung lediglich flüssig gehalten wird, jedoch eine Produktion nicht stattfindet. Über den Temperaturfühler 41, der die Temperatur der Masse am Ende der Kühlstufe 43 mißt, wird die Temperatur in dem Kühlkreislauf über den Temperaturregler 42 geregelt bzw. gesteuert, und zwar derart, daß die Menge des umlaufenden Wassers immer konstant gehalten wird und lediglich eine geringfügige Temperaturregelung stattfindet, um die gewünschte und festgelegte niedrige Temperatur am Ende der Kühlstufe 43 in der Masse zu erhalten. Über den Temperaturregler 42 wird das Magnetventil 30 betätigt.

Im Bereich der Kühlstufe 43 kann ein Sicherheitsdruckschalter 61 vorgesehen sein. Die Leitung 13, in der die warme Masse zugeführt wird, kann mit einem Temperaturfühler 62 und mit einer Anzeige 63 für die Masseeingangstemperatur versehen sein.

Der zweite Kreislauf, der als Wärmekreislauf bezeichnet wird, ist an sich grundsätzlich ähnlich aufgebaut wie der erste Kreislauf, nur findet hier innerhalb der Wärmestufe 44 eine Erwärmung der Masse statt. In einer von der Leitung 23 abzweigenden Leitung 64 ist ein Durchflußmengenregulierventil 65, ein Magnetventil 66 und ein Handabsperrventil 67 vorgesehen, so daß auf diese Art und Weise warmes Wasser aus dem Kühlkreislauf in einen Mischbehälter 68 des Wärmekreislaufs gelangen kann. Von dort führt eine Leitung 69 zu einer Pumpe 70 und über ein Rückschlagventil 71 und ein Manometer 72 in einer Leitung 73 zu der obersten Wärmekammer 47 der Wärmestufe 44. Auch hier wird das Warmwasser im Gegenstrom durch die Wärmestufen 45 hindurchgeführt und gelangt über eine Leitung 74 zurück zum Mischbehälter 68. Im Mischbehälter 68 ist eine Heizeinrichtung 75 vorgesehen, die über einen Temperaturfühler 76 und ein Kontaktthermometer 77 zum Zwecke der Nachtheizung betrieben werden kann. Von der Leitung 73 zweigt eine Leitung 78 ab, in der ein Handabsperrventil 79 vorgesehen ist. Die Leitung 78 führt zum Masseauslaß 18, dessen Leitungsbestandteile hierüber beheizt bzw. auf Temperatur gehalten werden können, damit die temperierte Masse auf dem Transport zur Verarbeitungsstelle nicht ihre günstige Masseausgangstemperatur verliert. In einer Rückleitung 80 ist ein Handabsperrventil 81 vorgesehen. Ein Temperaturfühler 82 und ein Sicherheitsthermometer 83 gestatten wir Überwachung der Massetemperatur an der betreffenden Stelle der Wärmestufe 44. Weiterhin ist ein Temperaturfühler 84 zur Messung der Masseausgangstemperatur vorgesehen, der mit einer Anzeigeeinrichtung 85 verbunden ist, um die Masseausgangstemperatur anzuzeigen. In diesem Wärmekreislauf ist weiterhin ein Wasserablaßventil 86 angeordnet. Ein Temperaturfühler 87 ist in der Leitung 73 angeordnet und mit einem Temperaturregler 88 verbunden, der andererseits das Magnetventil 66 steuert. Über einen Kühlwasserrücklauf 89 wird überschüssiges Wasser sowohl aus dem Wärmekreislauf wie auch aus dem Kühlkreislauf abgeführt.

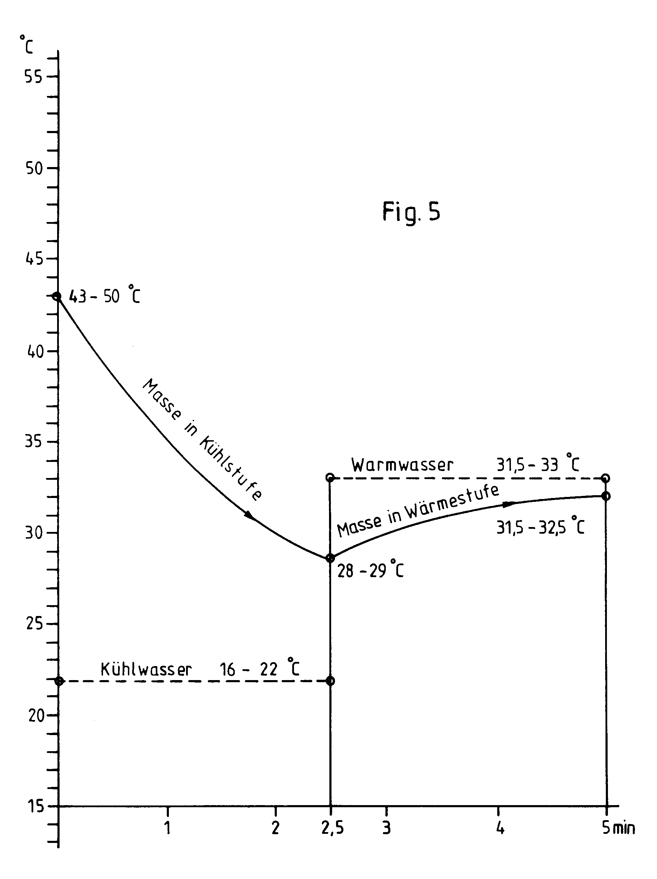

In Figur 5 sind die Temperaturverläufe nach der Vorrichtung gemäß Figur 4 dargestellt, wobei die Kühlstufe 43 etwa genau so groß gestaltet ist wie die Wärmestufe 44, also aus einer übereinstimmenden Anzahl von Kühletagen 6 und Wärmeetagen 45 gebildet sind. Hinsichtlich des Flächenverhältnisses des Warmeaustauschflächen des Wärmestufe 44 und des Kühlstufe 43 wird auf die europäische Anmeldung EP-A-339 129 verwiesen Die Verweildauer in der Kühlstufe 43 möge 2,5 min betragen, so daß auch die Verweildauer in der Wärmestufe 44 2,5 min beträgt. Die zu behandelnde Masse möge über die Leitung 13 mit einer Temperatur von etwa 43 bis 50°C der untersten Kühletage 6 zugeführt werden. Die Temperatur des Kühlwassers im Kühlkreislauf liegt in der Größenordnung von 16 bis 22°C und ist hier lediglich schematisch für den Bereich der Kühlstufe 43 angegeben. Da das Kühlwasser im Gegenstrom geführt wird, wird die dargestellte waagerechte Linie tatsächlich etwas ansteigend verlaufen, wobei durch die von der Masse aufgenommene Warme vielleicht eine Erwärmung des Kühlwassers in der Größenordnung von 0,5°C stattfindet. Wesentlich ist, daß die im Umlauf betriebene Kühlwassermenge sehr groß ist, um die Turbulenz in den Kühlkammern 9 zu erreichen. Die Temperatur im Kühlkreislauf wird in Abhängigkeit von der erreichten Massetemperatur am Ende der Kühlstufe 43 über den Temperaturfühler 41 gemessen und mit dem Temperaturregler 42 über das Magnetventil 30 ausgeregelt. Am Ende der Kühlstufe 43 weist die Masse eine Temperatur von 28 bis 29°C auf und tritt mit dieser Temperatur in die Wärmestufe 44 ein. Hier wird Warmwasser mit einer Temperatur von etwa 31,5 bis 33°C im Kreislauf geführt, wobei auch dies im Gegenstromverfahren erfolgt. Das erforderliche warme Wasser wird aus dem Kühlkreislauf entnommen und über die Heizeinrichtung 75 entsprechend aufgeheizt. Dieses warme Wasser verringert seine Temperatur beim Durchlauf durch die Wärmekammern 46, so daß es wieder aufgeheizt werden muß. Die Schokolade wird in der Wärmestufe 44 erwärmt, und zwar auf eine Masseausgangstemperatur in der Größenordnung zwischen 31,5 und 32,5°C. Diese Masseausgangstemperatur liegt um etwa 2°C höher als es bisher bekannt war, woraus die verbesserten Weiterverarbeitungseigenschaften resultieren.

**Bezugzeichenliste :**

1 = Antriebswelle
2 = Motor
3 = Getriebe
4 = Bodenplatte
5 = Deckplatte
6 = Kühletage
7 = Vorratskammer
8 = Massekammer
9 = Kühlkammer
10 = Kühlfläche
11 = Rührwerkzeug
12 = Pumpe
13 = Leitung
14 = Durchlaßöffnung
15 = Pfeil
16 = Durchlaßöffnung
17 = Pfeil
18 = Masseauslaß
19 = Pfeil
20 = Mischbehälter
21 = Leitung
22 = Pumpe
23 = Leitung
24 = Gehäusewand
25 = Leitung
26 = Leitung
27 = Pfeil
28 = Leitung
29 = Regelventil
30 = Magnetventil
31 = Ventil
32 = Lagering
33 = Nut
34 = Rührarm
35 = Mischschaufel
36 = Pfeil
37 = Erhebung
38 = Pfeil
39 = Ringraum
40 = Durchbrechung
41 = Temperaturfühler
42 = Temperaturregler
43 = Kühlstufe
44 = Wärmestufe
45 = Wärmeetage
46 = Massekammer
47 = Wärmekammer
48 = Wärmefläche
49 = Schmutzfilter
50 = Handabsperrventil
51 = Füllventil
52 = Leitung
53 = Handabsperrventil
54 = Wasserablaßventil
55 = Wasserablaßventil
56 = Rückschlagventil
57 = Manometer
58 = Heizeinrichtung
59 = Temperaturfühler
60 = Kontaktthermometer
61 = Sicherheitsdruckschalter
62 = Temperaturfühler
63 = Anzeige
64 = Leitung
65 = Durchflußmengenregulierventil
66 = Magnetventil
67 = Handabsperrventil
68 = Mischbehälter
69 = Leitung
70 = Pumpe
71 = Rückschlagventil
72 = Manometer
73 = Leitung
74 = Leitung
75 = Heizeinrichtung
76 = Temperaturfühler
77 = Kontaktthermometer
78 = Leitung
79 = Handabsperrventil
80 = Rückleitung
81 = Handabsperrventil
82 = Temperaturfühler
83 = Sicherheitsthermometer
84 = Temperaturfühler

85 = Anzeigeeinrichtung
86 = Wasserablaßventil
87 = Temperaturfühler
88 = Temperaturregler
89 = Kühlwasserrücklauf

**Patentansprüche**

1. Verfahren zum kontinuierlichen Aufbereiten von zu verarbeitenden kakaobutterhaltigen oder ähnlichen fetthaltigen Massen, insbesondere Schokolademasse, in einer Temperiermaschine mit mehreren Kühletagen mit Kühlflächen und nachgeschalteten Wärmeetagen mit Wärmeflächen, wobei die Masse über eine Pumpe nacheinander durch Massekammern der Kühletagen und der Wärmeetagen geführt und dabei in den Massekammern unter Anwendung angetriebener Rührwerkzeuge gerührt wird, während Kühlkammern an den Kühlflächen von einem Kühlmedium und Wärmekammern an den Wärmeflächen von einem Wärmemedium durchströmt werden, dadurch gekennzeichnet, daß die Menge des durch die Kühlkammern strömenden Kühlmediums so gesteigert wird , daß sich ein turbulenter Strömungszustand ergibt, daß die Masse in den Massekammern beim Rühren derart intensiv durchmischt wird, daß sich hier Verwirbelung einstellt, und daß bei berührungsloser Abnahme der Masse von den Kühl- bzw. Wärmeflächen durch die Rührwerkzeuge mit einem Schergefälle im Spalt zwischen den Kühl- bzw. Wärmeflächen einerseits und den Rührwerkzeugen andererseits zwischen 500 und 4000 sec$^{-1}$ gearbeitet wird.

2. Verfahren nach Anspruch 1, dadurch gekennzeichnet, daß das Kühlmedium kontinuierlich durch die Kühlkammern umgewälzt und dabei die Temperatur des Kühlmediums gesteuert bzw. geregelt wird.

3. Verfahren nach Anspruch 1 und 2, dadurch gekennzeichnet, daß das Kühlmedium mit einer Temperatur in einem Bereich von 16 bis 22°C umgewälzt wird.

4. Verfahren nach Anspruch 1, dadurch gekennzeichnet, daß das Wärmemedium kontinuierlich durch die Wärmekammern umgewälzt und dabei Menge und Temperatur des Wärmemediums konstantgehalten werden.

5. Verfahren nach Anspruch 1, dadurch gekennzeichnet, daß die Masse in einer ersten Stufe auf 28 bis 29°C abgekühlt und dabei eine möglichst große Anzahl von stabilen $\beta$-Kristallen erzeugt werden, und daß die Masse in einer zweiten Stufe auf eine Masseausgangstemperatur von ca. 31,5 bis 32,5°C bei einer konstanten Warmwassertemperatur von 31,5 bis 33°C erwärmt wird.

6. Verfahren nach Anspruch 5, dadurch gekennzeichnet, daß die Verweilzeiten in den beiden Stufen etwa gleich lang gewählt sind.

7. Vorrichtung zur Durchführung des Verfahrens nach Anspruch 1 bis 6, mit einer Temperiersäule,die mehrere, einen Zylinder bildende, übereinander angeordnete und an einem Kühlkreislauf für Kühlmedium angeschlossene Kühlkammern (9) und an einen Wärmekreislauf für Wärmemedium angeschlossene Wärmekammern (46) und zwischen den Kühlflächen (10) und den Wärmeflächen (48) gebildete Massekammern (8, 46) aufweist, wobei in den Massekammern (8, 46) Rührwerkzeuge (11) auf einer gemeinsamen, senkrecht angeordneten Antriebswelle (1) umlaufen und die einzelnen Massekammern (8, 46) über Durchlaßöffnungen (14, 16) miteinander verbunden sind, mit einer Pumpe (12) zum Fördern der Masse durch die Massekammern (8, 46), einer weiteren Pumpe (22) für den Antrieb des Kühlmediums durch die Kühlkammern (9) und einer Pumpe (70) für den Antrieb des Wärmemediums durch die Wärmekammern (47), dadurch gekennzeichnet, daß die Durchlaßöffnungen (14, 16) von je zwei benachbarten Massekammern (8, 46) abwechselnd auf kleinem und auf großem Radius vorgesehen sind, daß die Rührwerkzeuge (11) als berührungslose Abstreif- und Mischorgane ausgebildet sind, daß die Pumpe (22) für das Kühlmedium zwecks Erzeugung von Turbulenz auf eine hohe Durchsatzleistung ausgelegt ist, und daß der Kreislauf des Kühlmediums mit einer Temperaturregeleinrichtung versehen ist.

8. Vorrichtung nach Anspruch 7, dadurch gekennzeichnet, daß als Rührwerkzeug (11) radial von der Antriebswelle abstehende Rührarme (34) vorgesehen sind, die mit einer Vielzahl von Mischschaufeln (35) besetzt sind.

9. Vorrichtung nach Anspruch 7 und 8, dadurch gekennzeichnet, daß in jeder im wesentlichen durch zwei Kühlflächen (10) begrenzten Massekammer (8) nur ein Rührwerkzeug (11) mit etwa mittig angeordneten Rührarmen (34) vorgesehen ist, und daß die Rührarme (34) beidseitig mit den Mischschaufeln (35) besetzt sind, wobei die Mischschaufeln (35)an der einen Seite mit entgegengesetzter Förderwirkung zu der anderen Seite angeordnet ist.

10. Vorrichtung nach Anspruch 7 bis 9, dadurch gekennzeichnet, daß die Mischschaufeln (35) plattenförmig ausgebildet und schrägstehend auf den Rührarmen (34) angeordnet sind.

11. Vorrichtung nach Anspruch 10, dadurch gekennzeichnet, daß die auf unterschiedlichem Radius angeordneten Mischschaufeln in unterschiedlicher Schräglage angeordnet sind.

12. Vorrichtung nach Anspruch 11, dadurch gekennzeichnet, daß die Rührarme (34) durchbrochen ausgebildet sind.

13. Vorrichtung nach Anspruch 7, dadurch gekennzeichnet, daß die Rührarme (34) auf die Antriebswelle (1) umgebenden Lagerringen (32) angeordnet sind, und daß die Lagerringe einseitig zur Bildung der inneren Durchlaßöffnung durchbrochen sind.

14. Vorrichtung nach Anspruch 7, dadurch gekennzeichnet, daß mehrere Kühletagen (6) und/oder Wärmeetagen (45) paketweise zusammengefaßt sind, und daß jedem so gebildeten Paket aus Kühletagen (6) ein eigener Kühlmittelkreislauf oder -teilkreislauf und/oder jedem Paket aus Wärmeetagen (45) ein eigener Wärmemittelkreislauf oder -teilkreislauf zugeordnet ist.

## Claims

1. Process for the continuous preparation of masses, which are to be processed and contain cocoa butter or similar fat, especially chocolate mass, in a heating machine with several cooling stages with cooling surfaces and downstream heating stages with heating surfaces, wherein the mass is conducted by way of a pump in succession through mass chambers of the cooling stages and of the heating stages and at the same time is conducted into the mass chambers with use of driven stirring tools, while cooling chambers are flowed through at the cooling surfaces by a cooling medium and heating chambers are flowed through at the heating surfaces by a heating medium, characterised thereby, that the quantity of the cooling medium flowing through the cooling chambers is so increased that a turbulent flow state results, that the mass in the mass chambers is intensively mixed through during the stirring in the manner that turbulence sets in here, and that on contactless removal of the mass from the cooling or heating surfaces by the stirring tools the operation is with a shear gradient of between 500 and 4000 sec $^{-1}$ in the gap between the cooling or heating surfaces on the one hand and the stirring tools on the other hand.

2. Process according to claim 1, characterised thereby, that the cooling medium is continuously circulated through the cooling chambers and at the same time the temperature of the cooling medium is controlled or regulated.

3. Process according to claim 1 and 2, characterised thereby, that the cooling medium is circulated with a temperature in a range of 16 to 22°C.

4. Process according to claim 1, characterised thereby, that the heating medium is continuously circulated through the heating chambers and at the same time the quantity and temperature of the heating medium are kept constant.

5. Process according to claim 1, characterised thereby, that the mass is cooled down in a first step to 28 to 29°C in a first step and at the same time a large as possible number of stable beta crystals are generated, and that the mass is heated in a second step to a mass exit temperature of about 31.5 to 32.5°C in the case of a constant hot water temperature of 31.5 to 33°C.

6. Process according to claim 5, characterised thereby, that the dwell times in both the steps are selected to be about equally long.

7. Device for the carrying out of the process according to claim 1 to 6, with a heating column comprising several cooling chambers (9) connected to a cooling circuit for cooling medium, heating chambers (46) connected to a heating circuit for heating medium and mass chambers (8, 46) formed between the cooling surfaces (10) and the heating surfaces (48), the chambers being arranged one above the other and forming a cylinder, wherein stirring tools (11) on a common vertically arranged drive shaft (1) circulate in the mass chambers (8, 46) and the individual mass chambers (8, 46) are connected with one another by way of throughflow openings (14, 16), with a pump (12) for the conveying of the mass through the mass chambers (8, 46), a further pump (22) for the impulsion of the cooling medium through the cooling chambers (9) and a pump (70) for the impulsion of the heating medium through the heating chambers (47), characterised thereby, that the throughflow openings (14, 16) of each two adjacent mass chambers (8, 46) are provided alternately on small and on large radii, that the stirring tools (11) are constructed as contactless stripping and mixing elements, that the pump (22) for the cooling medium is designed for a high throughput capacity for the purpose of generation of turbulence, and that the circuit of the cooling medium is provided with a temperature regulating equipment.

8. Device according to claim 7, characterised thereby, that stirring arms (34), which are equipped with a plurality of mixing blades (35) and project readily from the drive shaft, are provided as stirring tool (11).

9. Device according to claim 7 and 8, characterised thereby that only one stirring tool (11) with approximately centrally arranged stirring arms (34) is provided in each mass chamber (8), which is bounded substantially by two cooling surfaces (10), and that the stirring arms (34) are equipped at both sides with the mixing blades (35), wherein the mixing blades (35) at the one side are arranged with opposite conveying effect to the other side.

10. Device according to claim 7 or 9, characterised thereby, that the mixing blades (35) are constructed plate-shaped and are arranged standing obliquely on the mixing arms (34).

11. Device according to claim 10, characterised thereby, that the mixing blades arranged on different radii are arranged in different angular setting.

12. Device according to claim 11, characterised thereby, that the stirring arms (34) are constructed to be perforated.

13. Device according to claim 7, characterised thereby, that the stirring arms (34) are arranged on bearing rings (32) surrounding the drive shaft (1), and that the bearing rings are perforated at one side for the formation of the internal throughflow opening.

14. Device according to claim 7, characterised thereby, that several cooling stages (6) and/or heating stages (45) are combined in the manner of a packet, and that associated with each thus formed packet of cooling stages (6) is an individual cooling means circuit or partial circuit and/or associated with each packet of heating stages (45) is an individual heating means circuit or partial circuit.

**Revendications**

1. Procédé de préparation en continu de masses contenant du beurre de cacao ou des graisses analogues à traiter, en particulier une masse de chocolat, dans une machine à équilibrage de température comprenant plusieurs étages de refroidissement avec des surfaces de refroidissement et, en aval, des étages de chauffage avec des surfaces de chauffage, la masse étant acheminée, par l'intermédiaire d'une pompe, successivement à travers des chambres de masse des étages de refroidissement et des étages de chauffage, et étant, en l'occurrence, agitée dans les chambres de masse par l'emploi d'outils d'agitation entraînés, tandis que des chambres de refroidissement sont parcourues par un agent de refroidissement au niveau des surfaces de refroidissement et que des chambres de chauffage sont parcourues par un agent de chauffage au niveau des surfaces de chauffage, caractérisé en ce que la quantité d'agent de refroidissement circulant dans les chambres de refroidissement est augmentée de façon à instaurer un état d'écoulement turbulent, en ce que la masse dans les chambres de masse est mélangée de manière intensive lors de l'agitation de façon qu'il s'y produise un tourbillonnement, et en ce que, parallèlement à un enlèvement sans contact de la masse sur les surfaces de refroidissement et, respectivement, de chauffage par les outils d'agitation, on travaille avec un gradient de cisaillement compris entre 500 et 4 000 sec$^{-1}$ dans l'interstice entre, d'une part, les surfaces de refroidissement et, respectivement, de chauffage et, d'autre part, les outils d'agitation.

2. Procédé selon la revendication 1, caractérisé en ce que l'agent de refroidissement circule en continu à travers les chambres de refroidissement et, en l'occurrence, la température de l'agent de refroidissement est commandée ou régulée.

3. Procédé selon la revendication 1 ou 2, caractérisé en ce que l'agent de refroidissement circule à une température située dans une plage comprise entre 16 ° C et 22 ° C.

4. Procédé selon la revendication 1, caractérisé en ce que l'agent de chauffage circule en continu à travers les chambres de chauffage, la quantité et la température de l'agent de chauffage étant, en l'occurrence, maintenues constantes.

5. Procédé selon la revendication 1, caractérisé en ce que, dans un premier niveau, la masse est refroidie à 28-29 °C et, ce faisant, un nombre aussi grand que possible de cristaux $\beta$ stables est produit, et en ce que la masse est réchauffée, dans un second niveau, avec une température de sortie de masse d'environ 31,5 °C à 32,5 °C, à une température constante de l'eau chaude de l'ordre de 31,5 °C à 33 °C.

6. Procédé selon la revendication 5, caractérisé en ce que les temps de séjour dans les deux niveaux sont choisis de durée sensiblement égale.

7. Appareil destiné à la réalisation du procédé selon l'une quelconque des revendications 1 à 6, comprenant une colonne d'équilibrage de température comportant plusieurs chambres de refroidissement (9) qui forment un cylindre, qui sont superposées et qui sont reliées à un circuit pour l'agent de refroidissement, des chambres de chauffage (46) reliées à un circuit de chauffage pour l'agent de chauffage, et des chambres de masse (8, 46) formées entre les surfaces de refroidissement (10) et les surfaces de chauffage (48), des outils d'agitation (11) montés sur un arbre d'entraînement commun disposé verticalement (1) tournant dans les chambres de masse (8, 46) et les différentes chambres de masse (8, 46) étant reliées entre elles par des ouvertures de passage (14, 16), comprenant une pompe (12) pour refouler la masse à travers les chambres de masse (8, 46), une autre pompe (22) pour entraîner l'agent de refroidissement à travers les chambres de refroidissement (9) et une pompe (70) pour entraîner l'agent de chauffage à travers les chambres de chauffage (47), caractérisé en ce que les ouvertures de passage (14, 16) de deux chambres de masse voisines (8, 46) sont prévues alternativement sur le petit et sur le grand rayon, en ce que les outils d'agitation (11) sont réalisés sous la forme d'organes racleurs et mélangeurs sans contact, en ce que la pompe (22) pour l'agent de refroidissement est conçue pour un débit élevé dans le but de créer une turbulence, et en ce que le circuit d'agent de refroidissement est muni d'un système de régulation de température.

8. Appareil selon la revendication 7, caractérisé en ce que, comme outil d'agitation (11), il est prévu des bras d'agitation (34) qui dépassent radialement de l'arbre d'entraînement et qui sont munis d'une pluralité de pales mélangeuses (35).

9. Appareil selon l'une des revendications 7 et 8, caractérisé en ce que, dans chaque chambre de masse (8) limitée pour l'essentiel par deux surfaces de refroidissement (10), il n'est prévu qu'un outil d'agitation (11) avec des bras d'agitation (34) disposés sensiblement de manière centrée, et en ce que les bras d'agitation (34) sont munis, de part et d'autre, des pales mélangeuses (35), les pales mélangeuses (35) étant disposées sur l'un des côtés pour exercer un effet de refoulement opposé par rapport à l'autre côté.

10. Appareil selon l'une quelconque des revendications 7 à 9, caractérisé en ce que les pales mélangeuses (35) sont conçues sous forme de plaques et disposées en biais sur les bras d'agitation (34).

11. Appareil selon la revendication 10, caractérisé en ce que les pales mélangeuses disposées sur différents rayons ont une inclinaison différente.

12. Appareil selon la revendication 11, caractérisé en ce que les bras d'agitation (34) sont conçus sous forme ajourée.

13. Appareil selon la revendication 7, caractérisé en ce que les bras d'agitation (34) sont montés sur des anneaux de support (32) entourant l'arbre d'entraînement (1), et en ce que les anneaux de support sont percés sur un côté pour former l'ouverture intérieure de passage.

14. Appareil selon la revendication 7, caractérisé en ce que plusieurs étages de refroidissement (6) et/ou étages de chauffage (45) sont regroupés sous forme de blocs, et en ce qu'à chaque bloc d'étages de refroidissement (6) ainsi formé est attribué son propre circuit ou circuit partiel d'agent de refroidissement et/ou à chaque bloc d'étages de chauffage (45) est attribué son propre circuit ou circuit partiel d'agent de chauffage.

Fig. 1

EP 0 289 849 B1

Fig. 2

Fig. 3

Fig. 4

EP 0 289 849 B1

Temperierwasserkreislauf

Kaltwasserkreislauf

Massekreislauf

Fig. 5

°C

55

50

45

43 – 50 °C

40

35    Masse in Kühlstufe    Warmwasser    31,5 – 33 °C

Masse in Wärmestufe

30    28 – 29 °C    31,5 – 32,5 °C

25

Kühlwasser    16 – 22 °C

20

15

1    2    2,5    3    4    5 min